# EUROPÄISCHE PATENTANMELDUNG

(11) **EP 2 159 367 A1**
(43) Veröffentlichungstag der Anmeldung: **03.03.2010**
(21) Anmeldenummer: 08105115.3
(22) Anmeldetag: 25.08.2008
(51) Int. Cl.: E06B 9/04, E04B 1/61, F16B 5/00, E06B 3/70

(54) **Verfahren zur Bildung eines Verbundes von Profilbrettern**

(71) Anmelder: Fabricius Fastener GmbH, 33102 Paderborn (DE)
(72) Erfinder: Fabricius, Jürgen, 33102, Paderborn (DE)
(74) Vertreter: Hanewinkel, Lorenz

(57) **Zusammenfassung**

Die Erfindung beschreibt ein Verfahren zur Bildung eines Verbundes von Profilbrettern (2) mit einem Wulst (11) und einer Nut (12) an einer Seitenkante, die formschlüssig zueinander passen, und in dem Wulst ein Hohlraum (8) mit einer Hinterwand in definierter Tiefe vorhanden ist, wobei unter einem Winkel in den Wulst (11) eine Reihe von Löchern in einem solchen definierten Abstand gebohrt wird, und die Löcher in zwei aneinander stoßenden Seitenkanten genau übereinanderliegen, und in die Löcher Bolzen (3) gesteckt werden, die an die Hinterwand (10) anstoßen, und ein nächstes Profilbrett mit seinen Löchern auf die Bolzen gesteckt wird wobei die obersten und untersten Bolzen Querbohrungen besitzen, in die Befestigungsmittel längs der beiden angrenzenden Hohlräume (8) von oben bzw. unten eingesetzt werden.

## Beschreibung

Die Erfindung beschreibt ein Verfahren zur Bildung eines Verbundes von Profilbrettern mit einem Wulst und einer Nut an einer Seitenkante, die formschlüssig zueinander passen, und in dem Wulst ein Hohlraum mit einer Hinterwand in definierter Tiefe vorhanden ist.

Ein Verbund von Profilbrettern findet eine vielseitige Anwendung. Ein wesentlicher Einsatzfall ist die Herstellung von Klappläden vor Fenstern. Diese wurden traditionell aus Holzbrettern hergestellt und über aufgeschraubte Querleisten verbunden. In neuerer Zeit setzen sich aber immer mehr Profilbretter aus Kunststoff durch, die in Verbünden ohne zusätzliche Querleisten zu flachen Läden zusammengefügt werden.
Zur Herstellung der Verbünde werden bisher lange Schrauben eingesetzt, die von einer Seitenkante her durch die Profilbretter hindurch geschraubt werden und damit die Profilbretter zusammenziehen. Dies ist ein aufwendiges Verfahren führt bei nicht exakt eingedrehten Schrauben zu unschönen und unsauberen Verbiegungen in dem Verbund.

Es ist Aufgabe der Erfindung, ein Verfahren zur Bildung eines Verbundes von Profilbrettern anzugeben, dass eine saubere und einfache Montage erlaubt.

Diese Aufgabe wird durch die Merkmale des Anspruch 1 gelöst. Ein geeigneter Bolzen zum Einsatz in diesem Verfahren ist in Anspruch 8 beschrieben.
Ausführungsformen der Erfindung sind in den abhängigen Ansprüchen angegeben.

Das erfindungsgemäße Verfahren zur Bildung eines Verbundes aus Profilbrettern geht von Profilbrettern aus, die an ihren Seitenkanten jeweils einen Wulst und eine Nut aufweisen, die formschlüssig zueinander passen. Der Wulst besitzt auch einen Hohlraum, der an der Seitenkante längs verläuft und durch eine Hinterwand in einer definierten Tiefe abgeschlossen ist.
Zur Verbindung der Profilbretter werden nun in die zur Mitte der Seitenkante weisende Wand des Wulstes unter einem Winkel Löcher gebohrt. Diese werden in einer Reihe in definierten Abständen so positioniert, dass die Löcher von zwei zusammenstoßenden Seitenkanten genau übereinanderliegen. So können in die Löcher Bolzen gesteckt werden, die in die nach dem Aufstecken nebeneinander liegenden Hohlräume der nun aneinandergrenzenden Wülste reichen. Dabei sind die Bolzen so lang, dass sie bis an die Hinterwände der beiden Hohlräume reichen.
Die Reihe von eingesteckten Bolzen verbindet die aneinanderliegenden Profilbretter sauber miteinander. Durch sie werden Verbiegungen zwischen den Profilbrettern verhindert.
Die Bolzen werden auch zur Befestigung der Profilbretter aneinander benutzt. Dazu werden in die Bolzen, die sich an oberster und unterster Position in der Reihe der Löcher befinden, mit Querbohrungen versehen, in die von oben bzw. unten durch die Hohlräume Befestigungsmittel eingesetzt werden und ein Auseinaderziehen der Naht zwischen den Profilbrettern verhindern.

Ein günstiger Winkel für die Reihe von Löchern in den Wülsten beträgt 45°. Dadurch kann das nächste Profilbrett einfach auf die Reihe der eingesteckten Bolzen aufgesteckt werden und die Wülste gleiten in die entsprechenden Nuten.

Die Querbohrungen in den oberen und unteren Bolzen weisen vorteilhaft Gewinde auf, in die als Befestigungsmittel dazu passende Schrauben eingedreht werden. Die Schrauben sind dabei als Senkkopfschrauben ausgeführt, so dass sich der Kopf beim Eindrehen der Schraube in die Oberkante des Hohlraumes bündig einpresst. Damit bleibt die obere Fläche des Verbundes ohne Störungen und ein oberes Abschlussprofil kann aufgesetzt werden. Das Eindrehen der Schrauben wird eine Verjüngung an ihrer Spitze erleichtert.

Der Bolzen zum Verbinden der Profilbretter ist an seinen Enden unter dem Winkel der gebohrten Löcher abgeschrägt und besitzt eine solche Länge, dass er von der Hinterwand in dem ersten Wulst bis zur Hinterwand in dem angrenzenden Wulst reicht. Durch das Anstoßen der Enden des Bolzens unter dem Bohrwinkel wird der Bolzen so ausgerichtet, dass die Querbohrungen in die Längsrichtung der Hohlräume weisen und eine Schraube einfach eingesetzt werden kann.

Dabei sind die Querbohrungen so in dem Bolzen positioniert, dass sie sich mittig in dem jeweiligen Hohlraum befinden. So kann der Schraubenkopf sich mittig in die Wände des Hohlraums einpressen.

Das Einstecken der Bolzen wird vereinfacht, indem der spitze Winkel der Abschrägung der Enden abgerundet ist. Dies erlaubt eine noch einfachere Montage.

Eine Ausführungsform der Erfindung ist beispielhaft in den Figuren dargestellt.
Fig. 1 zeigt einen Klappladen aus einem Verbund von Profilbrettern.
Fig. 2 zeigt eine Draufsicht auf einen Bolzen mit Gewindebohrungen.
Fig. 3 zeigt eine Seitenansicht des Bolzens mit Schrauben.
Fig. 4 zeigt einen Querschnitt durch die Verbindung von zwei Profilbrettern.
Fig. 5 zeigt einen senkrechten Schnitt durch die Verbindung von zwei Profilbrettern.
Fig. 6 zeigt die Draufsicht auf einen Verbund von Profilbrettern.

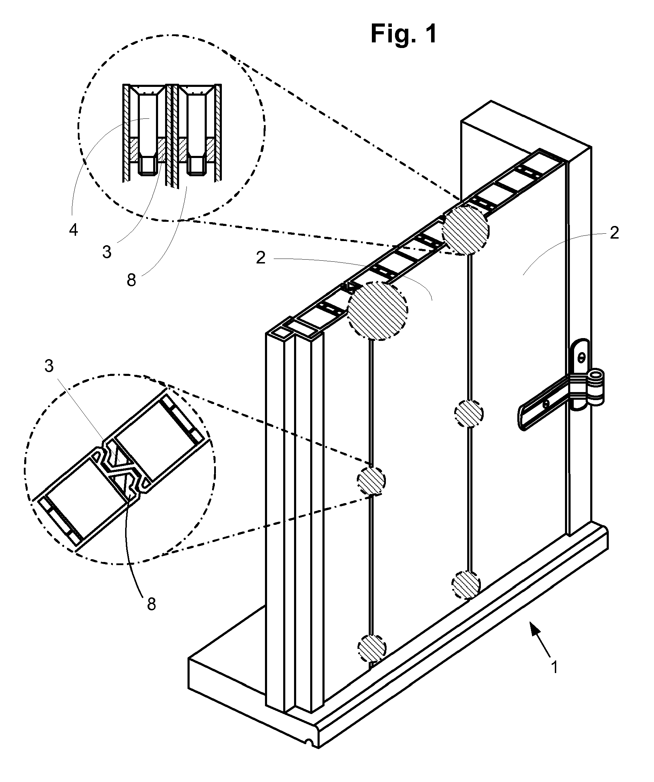

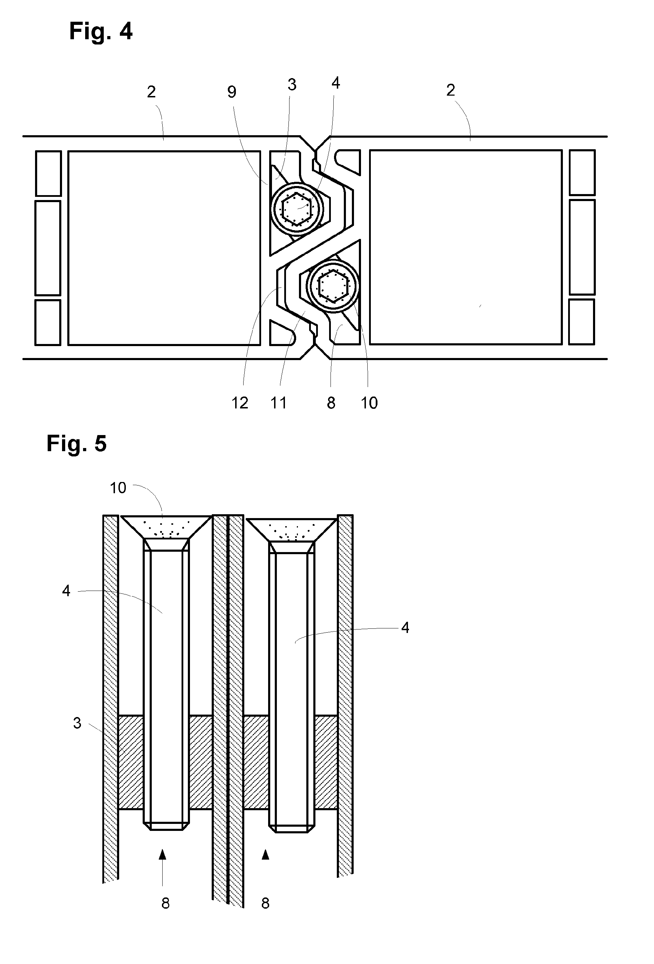

In Fig. 1 ist ein Verbund 1 von mehreren Profilbrettern 2 dargestellt, der einen Klappladen vor einem nicht dargestellten Fenster bildet. Der Klappladen ist Schwenkbar angebracht und besitz an einem Ende eine Abschlussleiste.
Bei diesem Verbund 1 sind drei Profilbretter 2 miteinander verbunden. An dem oberen Ende der Profilbretter sind Bolzen 3 mit Schrauben 4 in den Hohlräumen untergebracht. Das obere Detail ist in Fig. 5 näher erläutert. Die Bolzen am unteren Ende sind ebenso angebracht.
In der mittleren Partie der Naht zwischen zwei Profilbrettern 2 sind nur Bolzen eingesteckt, wie es in Fig. 4 näher erläutert ist.

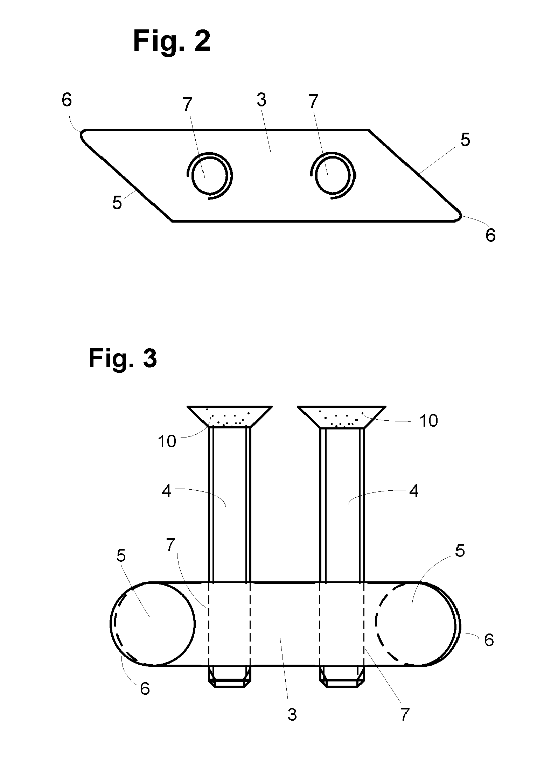

In Fig. 2 ist ein Bolzen 3 mit zwei Gewindebohrungen 7 in der Draufsicht dargestellt. Die Enden des Bolzens besitzen die Abschrägungen 5, deren Spitze die Abrundung 6 aufweist.
In Fig. 3 ist der gleiche Bolzen 3 mit zwei, in die Gewindebohrungen 7 eingedrehten Schrauben 4 in Seitenansicht dargestellt. Die Schrauben 4 besitzen Senkköpfe, die sich in das Profil einpressen können.

Fig. 4 zeigt einen Querschnitt durch die Verbindung von zwei Profilbrettern 2, bei denen die Wülste 11 und die Nuten 12 formschlüssig ineinander greifen. Der Bolzen 3 ist in den in den Wülsten 11 vorhandene Hohlraum 8 eingesteckt Er legt sich jeweils an die Hinterwand 9 an und ist damit gegen eine Verdrehung gesichert. Die Schrauben 4 sind bei oberen und untern Bolzen 3 eingeschraubt und pressen sich in den Rand des Hohlraums 8 ein.
Beim Einsatz eines Bolzens 3 in einer mittleren Position entfallen die Schrauben 4.

In Fig. 5 ist der Einsatz der Schrauben 4 in den Hohlräumen 8 näher dargestellt. Der Bolzen 3 ist quer durch die Hohlräume gesteckt und die Schrauben 4 darin eingedreht. Dabei pressen sich die Schraubenköpfe 10 in den oberen Rand des Hohlraums 8 und pressen damit auch den Bolzen 3 fest. Es ist eine feste und sichere Verbindung entstanden.

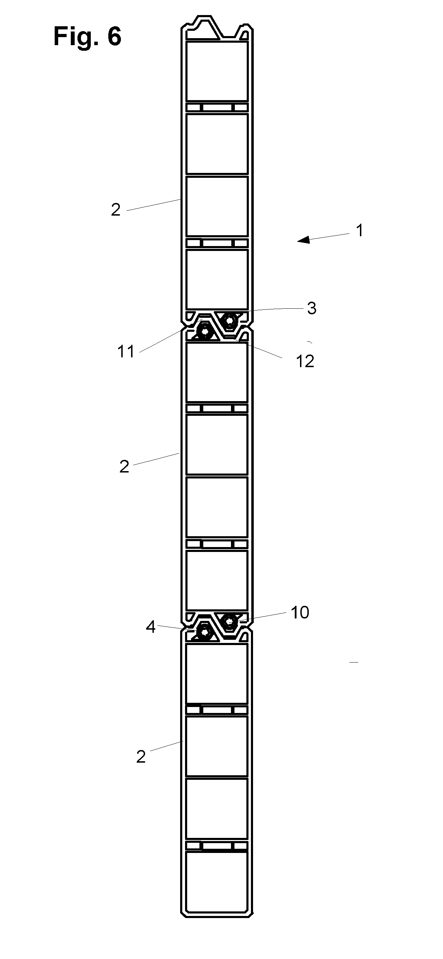

In Fig. 6 ist ein Verbund 1 von drei Profilbrettern 2 gezeigt, die an ihren Seitenkanten mit den Wülsten 11 und den Nuten 12 formschlüssig aneinanderpassen und über die Bolzen 3 miteinander verbunden sind, In oberen Positionen sind die Schrauben 4 eingedreht, die sich mit ihren Schraubenköpfen 11 in den jeweiligen Wulst einpressen und eine stabile Verbindung der Profilbretter 2 aneinander herstellen.

### Bezugszeichenliste

- 1: Verbund von Profilbrettern
- 2: Profilbrett
- 3: Bolzen
- 4: Schraube
- 5: Abschrägung
- 6: Abrundung
- 7: Bohrung mit Gewinde
- 8: Hohlraum
- 9: Hinterwand
- 10: Schraubenkopf
- 11: Wulst
- 12: Nut

## Patentansprüche

1. Verfahren zur Bildung eines Verbundes von Profilbrettern (2) mit einem Wulst (11) und einer Nut (12) an einer Seitenkante, die formschlüssig zueinander passen, und in dem Wulst ein Hohlraum (8) mit einer Hinterwand in definierter Tiefe vorhanden ist,
**dadurch gekennzeichnet,**
**dass** unter einem Winkel in den Wulst (11) eine Reihe von Löchern in einem solchen definierten Abstand gebohrt wird, dass die Löcher in zwei aneinander stoßenden Seitenkanten genau übereinanderliegen,
**dass** in die Löcher Bolzen (3) gesteckt werden, die an die Hinterwand (10) anstoßen, dass ein nächstes Profilbrett mit seinen Löchern auf die Bolzen gesteckt wird;
**dass** die obersten und untersten Bolzen Querbohrungen besitzen, in die Befestigungsmittel längs der beiden angrenzenden Hohlräume (8) von oben bzw. unten eingesetzt werden.

2. Verfahren nach Anspruch 1, **dadurch gekennzeichnet,**
**dass** die Löcher unter einem Winkel von 45° gebohrt werden.

3. Verfahren nach Anspruch 1, **dadurch gekennzeichnet, dass** die Querbohrungen (7) Gewinde aufweisen und die Befestigungsmittel dazu passende Schrauben (4) sind.

4. Verfahren nach Anspruch 2, **dadurch gekennzeichnet,**
**dass** die Schrauben (4) einen Senkkopf (10) besitzen, der durch das Einschrauben bündig in die Oberkante des Hohlraumes (8) einpresst wird.

5. Verfahren nach Anspruch 2, **dadurch gekennzeichnet,**
**dass** die Schrauben (4) an ihrer Spitze verjüngt sind.

6. Bolzen zum Verbinden von Profilbrettern nach einem der vorstehenden Ansprüche,
**dadurch gekennzeichnet, dass**
die Enden des Bolzens (3) gemäß dem Winkel der Bohrungen abgeschrägt sind und die Länge des Bolzens dem Abstand der Hinterwände in den Wülsten (11) entspricht.

7. Bolzen nach Anspruch 6, **dadurch gekennzeichnet, dass** sie für den Einsatz an in den obersten oder untersten Löchern zwei Gewindelöcher (7) aufweisen, die mittig zu den Hohlräumen (8) positioniert sind.

8. Bolzen nach Anspruch 6, **dadurch gekennzeichnet, dass** der spitze Winkel der Abschrägung (5) abgerundet ist.
